# EUROPEAN PATENT SPECIFICATION

(11) **EP 4 344 903 B1**
(45) Date of publication and mention of the grant of the patent: **23.07.2025**
(21) Application number: 23196006.3
(22) Date of filing: 07.09.2023
(51) Int. Cl.: B60C 11/03, B60C 11/12, B60C 11/13

(54) **TIRE**
REIFEN
PNEUMATIQUE

(30) Priority: 30.09.2022 JP 2022157516
(43) Date of publication of application: 03.04.2024
(73) Proprietor: Sumitomo Rubber Industries, Ltd., Kobe-shi, Hyogo 651-0072 (JP)
(72) Inventor: MIZOKAWA, Hiroki, Kobe-shi, 651-0072 (JP)
(74) Representative: Manitz Finsterwald Patent- und Rechtsanwaltspartnerschaft mbB

(56) References cited:
- EP-A1- 2 907 674
- EP-A1- 3 925 799
- EP-A1- 4 049 860
- WO-A1-2022/050287
- DE-A1- 102005 058 365
- US-A1- 2022 194 139

## Description

### BACKGROUND OF THE INVENTION

### Field of the Invention

The present invention relates to a tire.

### Background Art

Japanese Laid-Open Patent Publication No. 2018-001976 proposes a winter pneumatic tire including four land portions in a tread portion. Each shoulder land portion of the pneumatic tire is divided into an inner land portion on a shoulder main groove side and an outer land portion on a tread end side by a circumferential sipe continuously extending in the tire circumferential direction. The inner land portion is provided with a plurality of inner shoulder axial grooves that communicate between the shoulder main groove and the circumferential sipe. The outer land portion is provided with a plurality of outer shoulder axial grooves that communicate between the tread end and the circumferential sipe. An inner end portion in the tire axial direction of each outer shoulder axial groove is provided at a position that does not intersect a region obtained by virtually extending an outer end portion in the tire axial direction of the inner shoulder axial groove along the tire axial direction.

In recent years, with enhancement of the performance of vehicles, further improvement of performance on ice and snow has been expected for tires. Meanwhile, tires are also required to maintain uneven wear resistance.

The present invention has been made in view of the above circumstances, and a main object of the present invention is to exhibit excellent performance on ice and snow while maintaining uneven wear resistance in a tire including a tread portion having four land portions.

A tire in accordance with the preamble of claim 1 is known from DE 10 2005 058365 A1. Related tires are described in EP 4 049 860 A1, US 2022/194139 A1, EP 2 907 674 A1 and WO 2022/050287 A1.

### SUMMARY OF THE INVENTION

The object is solved by a tire having the features of claims 1. Sub-claims are directed at preferable embodiments of the invention.

The present invention is directed to a tire including a tread portion, wherein the tread portion includes a first tread end, a second tread end, three circumferential grooves continuously extending in a tire circumferential direction between the first tread end and the second tread end, and four land portions demarcated by the three circumferential grooves; the three circumferential grooves include a first shoulder circumferential groove provided between the first tread end and a tire equator and a crown circumferential groove adjacent to a tire equator side of the first shoulder circumferential groove; the four land portions include a first shoulder land portion including the first tread end and a first crown land portion demarcated between the first shoulder circumferential groove and the crown circumferential groove; the first shoulder land portion includes a plurality of shoulder blocks demarcated by a plurality of shoulder axial grooves extending from the first shoulder circumferential groove to at least the first tread end; each of the plurality of shoulder blocks is provided with a plurality of shoulder sipes extending in a tire axial direction; the first crown land portion includes a plurality of crown blocks demarcated by a plurality of crown axial grooves extending from the first shoulder circumferential groove to the crown circumferential groove; each of the plurality of crown blocks is provided with a plurality of crown sipes extending in the tire axial direction; each of the plurality of crown sipes is closed at a ground-contact surface of the crown block without communicating with any of the crown circumferential groove and the first shoulder circumferential groove at at least one end thereof; each of the plurality of shoulder sipes includes a shoulder circumferential edge component which is a length in the tire circumferential direction; each of the plurality of crown sipes includes a crown circumferential edge component which is a length in the tire circumferential direction; and a total sum ΣCv of the crown circumferential edge components of all the crown sipes formed on the one crown block is larger than a total sum ΣSv of the shoulder circumferential edge components of all the shoulder sipes formed on the one shoulder block.

According to an embodiment of the invention, the total sum ΣCv of the crown circumferential edge components is 105% to 200% of the total sum ΣSv of the shoulder circumferential edge components.

According to an embodiment of the invention, each of the plurality of shoulder sipes includes a shoulder axial edge component which is a length in the tire axial direction, each of the plurality of crown blocks includes a crown axial edge component which is a length in the tire axial direction, and a total sum ΣCh of the crown axial edge components of all the crown sipes formed on the one crown block is smaller than a total sum ΣSh of the shoulder axial edge components of all the shoulder sipes formed on the one shoulder block.

According to an embodiment of the invention, the total sum ΣCh of the crown axial edge components is 50% to 95% of the total sum ΣSh of the shoulder axial edge components.

According to an embodiment of the invention, on the shoulder block, a plurality of sipe pairs each composed of the two shoulder sipes aligned in the tire axial direction are provided in the tire circumferential direction, and a sum of the shoulder axial edge components of the two shoulder sipes included in the one sipe pair is not less than 80% of a width in the tire axial direction of a ground-contact surface of the shoulder block.

According to an embodiment of the invention, the crown sipes each include a first sipe piece extending in the tire axial direction, a second sipe piece extending in the tire axial direction on the tire equator side with respect to the first sipe piece, and a third sipe piece connected between the first sipe piece and the second sipe piece and having a larger angle with respect to the tire axial direction than the first sipe piece and the second sipe piece.

According to an embodiment of the invention, a maximum width in the tire axial direction of a ground-contact surface of the first crown land portion is not greater than 95% of a maximum width in the tire axial direction of a ground-contact surface of the first shoulder land portion.

According to an embodiment of the invention, the crown circumferential groove includes a plurality of projections locally raised from a bottom surface thereof.

According to an embodiment of the invention, a maximum height in a tire radial direction of each of the projections is 1.0 to 2.0 mm.

As a result of adopting the above-described configuration, the tire according to the present invention can exhibit excellent performance on ice and snow while maintaining uneven wear resistance.

### BRIEF DESCRIPTION OF THE DRAWINGS

FIG. 1 is a development of a tread portion of a tire according to an embodiment of the present invention;
FIG. 2 is an enlarged view of a first shoulder land portion and a first crown land portion in FIG. 1;
FIG. 3 is an enlarged view of a shoulder block in FIG. 2;
FIG. 4 is an enlarged view of a crown block in FIG. 2;
FIG. 5 is an enlarged view of a shoulder sipe in FIG. 3;
FIG. 6 is an enlarged view of a crown sipe in FIG. 4;
FIG. 7 is a cross-sectional view taken along a line A-A in FIG. 2;
FIG. 8 is a cross-sectional view taken along a line B-B in FIG. 2; and
FIG. 9 is a development of a tread portion of a tire according to another embodiment of the present invention.

### DETAILED DESCRIPTION

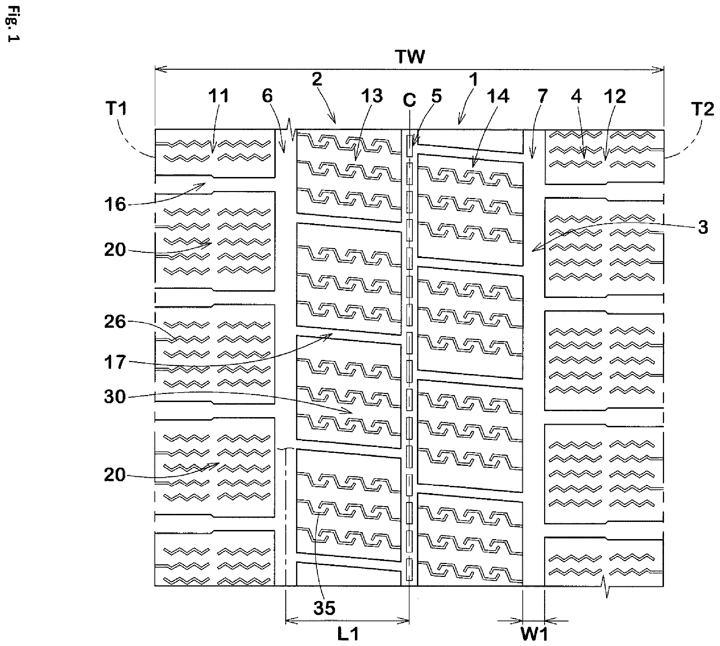

Hereinafter, embodiments of the present invention will be described with reference to the drawings. FIG. 1 is a development of a tread portion 2 of a tire 1 showing an embodiment of the present invention. The tire 1 according to the present embodiment of the invention is suitably used, for example, as a winter pneumatic tire for a passenger car. However, the present invention is not limited to such a mode.

As shown in FIG. 1, the tread portion 2 includes a first tread end T1, a second tread end T2, three circumferential grooves 3 continuously extending in the tire circumferential direction between the first tread end T1 and the second tread end T2, and four land portions 4 demarcated by these circumferential grooves 3. That is, the tire 1 according to the present invention is a tire in which the tread portion 2 is composed of only the four land portions 4. Such a tire 1 has fewer circumferential grooves than a tire including five land portions demarcated by four circumferential grooves, and tends to have an insufficient frictional force in the tire axial direction during running on ice and snow.

The first tread end T1 and the second tread end T2 respectively correspond to ends of a ground-contact surface obtained when 70% of a standardized load is applied to the tire 1 in a standardized state and the tread portion 2 is brought into contact with a flat surface at a camber angle of 0°.

In the case of a pneumatic tire for which various standards are defined, the "standardized state" is a state where the tire is fitted on a standardized rim and inflated to a standardized internal pressure and no load is applied to the tire. In the case of a non-pneumatic tire or a tire for which various standards are not defined, the standardized state means a standard use state, corresponding to the purpose of use of the tire, where no load is applied to the tire. In the present specification, unless otherwise specified, dimensions and the like of components of the tire are values measured in the standardized state.

The "standardized rim" is a rim that is defined, in a standard system including a standard on which the tire is based, by the standard for each tire, and is, for example, the "standard rim" in the JATMA standard, the "Design Rim" in the TRA standard, or the "Measuring Rim" in the ETRTO standard.

The "standardized internal pressure" is an air pressure that is defined, in a standard system including a standard on which the tire is based, by the standard for each tire, and is the "maximum air pressure" in the JATMA standard, the maximum value indicated in the table "TIRE LOAD LIMITS AT VARIOUS COLD INFLATION PRESSURES" in the TRA standard, or the "INFLATION PRESSURE" in the ETRTO standard.

In the case of a pneumatic tire for which various standards are defined, the "standardized load" is a load that is defined, in a standard system including a standard on which the tire is based, by the standard for each tire, and is the "maximum load capacity" in the JATMA standard, the maximum value indicated in the table "TIRE LOAD LIMITS AT VARIOUS COLD INFLATION PRESSURES" in the TRA standard, or the "LOAD CAPACITY" in the ETRTO standard. In addition, in the case of a tire for which various standards are not defined, the "standardized load" refers to the maximum load applicable when the tire is used, according to the above-described standards.

The three circumferential grooves 3 include a first shoulder circumferential groove 6, a second shoulder circumferential groove 7, and a crown circumferential groove 5. The first shoulder circumferential groove 6 is provided between the first tread end T1 and a tire equator C. The second shoulder circumferential groove 7 is provided between the second tread end T2 and the tire equator C. The crown circumferential groove 5 is adjacent to the tire equator C side of the first shoulder circumferential groove 6. Accordingly, the crown circumferential groove 5 is provided between the first shoulder circumferential groove 6 and the second shoulder circumferential groove 7. As a preferable mode, the crown circumferential groove 5 of the present embodiment of the invention is provided on the tire equator C.

A distance L1 in the tire axial direction from a groove center line of the first shoulder circumferential groove 6 or a groove center line of the second shoulder circumferential groove 7 to the tire equator C is, for example, 20% to 30% of a tread width TW. However, the present invention is not limited to such a mode. The tread width TW is the distance in the tire axial direction from the first tread end T1 to the second tread end T2 in the standardized state.

Each circumferential groove 3 extends, for example, in a straight manner so as to be parallel to the tire circumferential direction. As described later, each circumferential groove 3 may extend in a zigzag or wavy manner in the tire circumferential direction.

A groove width W1 of the circumferential groove 3 is preferably not less than 3.0 mm. In addition, the groove width W1 of the circumferential groove 3 is, for example, 3.0% to 6.0% of the tread width TW. The depth (not shown) of the circumferential groove 3 is, for example, 5.0 to 15.0 mm. However, the circumferential groove 3 is not limited to such a mode.

The four land portions 4 include at least a first shoulder land portion 11 and a first crown land portion 13. In addition to these land portions, the four land portions 4 of the present embodiment of the invention include a second shoulder land portion 12 and a second crown land portion 14. The first shoulder land portion 11 is demarcated on the outer side in the tire axial direction of the first shoulder circumferential groove 6. Accordingly, the first shoulder land portion 11 includes the first tread end T1. The first crown land portion 13 is demarcated between the first shoulder circumferential groove 6 and the crown circumferential groove 5.

Similarly, the second shoulder land portion 12 is demarcated on the outer side in the tire axial direction of the second shoulder circumferential groove 7. Accordingly, the second shoulder land portion 12 includes the second tread end T2. The second crown land portion 14 is demarcated between the second shoulder circumferential groove 7 and the crown circumferential groove 5. In the present embodiment of the invention, the second shoulder land portion 12 has substantially the same configuration as the first shoulder land portion 11. The second crown land portion 14 has substantially the same configuration as the first crown land portion 13. In the present specification, although the detailed description of the second shoulder land portion 12 and the second crown land portion 14 is omitted, the configurations of the first shoulder land portion 11 and the first crown land portion 13 can be applied to the second shoulder land portion 12 and the second crown land portion 14.

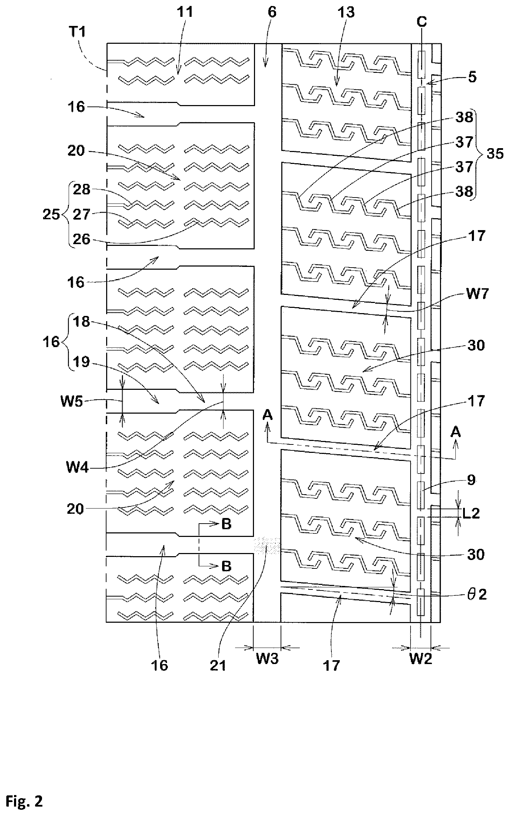

FIG. 2 shows an enlarged view of the first shoulder land portion 11 and the first crown land portion 13. As shown in FIG. 2, the first shoulder land portion 11 is provided with a plurality of shoulder axial grooves 16. These shoulder axial grooves 16 extend from the first shoulder circumferential groove 6 to at least the first tread end T1. Accordingly, the first shoulder land portion 11 includes a plurality of shoulder blocks 20 demarcated by the plurality of shoulder axial grooves 16.

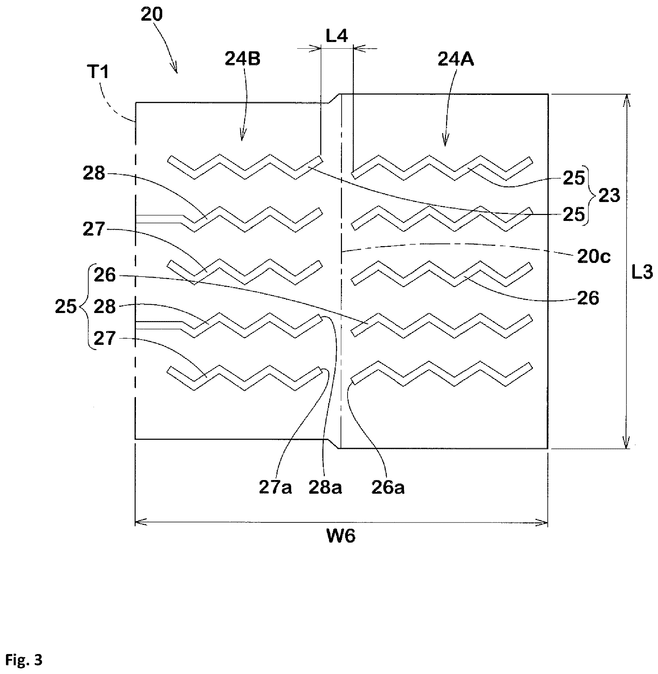

FIG. 3 shows an enlarged view of the shoulder block 20. As shown in FIG. 2 and FIG. 3, each of the plurality of shoulder blocks 20 is provided with a plurality of shoulder sipes 25 extending in the tire axial direction.

In the present specification, the "sipe" refers to a slit having a minute width and having a width of 1.5 mm or less between two inner walls facing each other. The width of the sipe is preferably 0.3 to 1.2 mm and more preferably 0.5 to 1.0 mm. Each sipe of the present embodiment of the invention is formed with a constant width over the entire depth thereof, and the width thereof is in the above-described range. However, the sipe is not limited to such a mode, and a chamfered portion may be provided at the opening of the sipe. In addition, the sipe may include a flask bottom at which the width is partially increased.

As shown in FIG. 2, the first crown land portion 13 is provided with a plurality of crown axial grooves 17. These crown axial grooves 17 extend from the first shoulder circumferential groove 6 to the crown circumferential groove 5. Accordingly, the first crown land portion 13 includes a plurality of crown blocks 30 demarcated by the plurality of crown axial grooves 17.

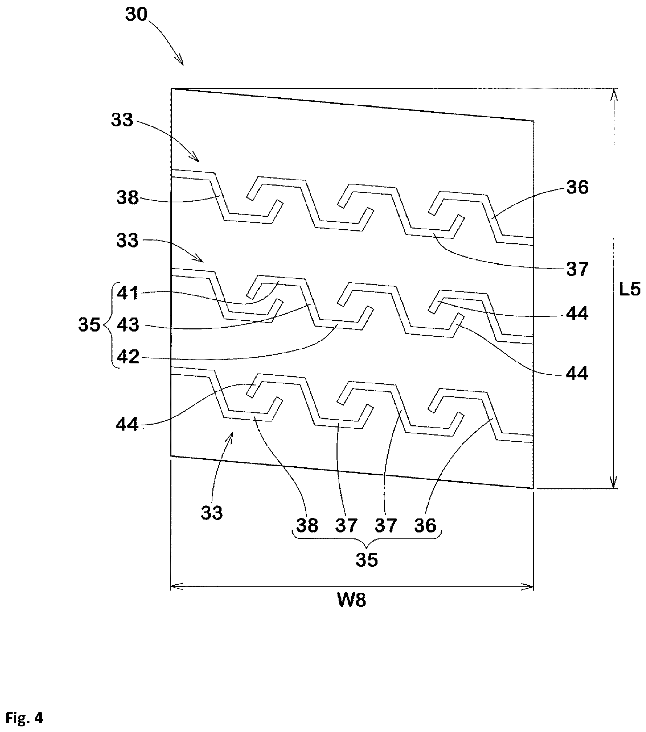

FIG. 4 shows an enlarged view of the crown block 30. As shown in FIG. 2 and FIG. 4, each of the plurality of crown blocks 30 is provided with a plurality of crown sipes 35 extending in the tire axial direction. In addition, each of the plurality of crown sipes 35 of the present invention is closed at a ground-contact surface of the crown block 30 without communicating with any of the crown circumferential groove 5 and the first shoulder circumferential groove 6 at at least one end thereof.

As shown in FIG. 2, the shoulder sipes 25 extending in the tire axial direction and the crown sipes 35 extending in the tire axial direction each refer to a sipe in which an angle of a virtual straight line obtained by connecting both ends of the sipe, with respect to the tire axial direction, is not less than 45°. In a preferable mode, the angle is not greater than 20°. Each of the first shoulder land portion 11 and the first crown land portion 13 of the present embodiment of the invention is provided with no sipe extending in the tire circumferential direction. A sipe extending in the tire circumferential direction refers to a sipe in which an angle of a virtual straight line obtained by connecting both ends of the sipe, with respect to the tire axial direction, is greater than 45°. In another embodiment of the invention, each land portion may be provided with sipes extending in the tire circumferential direction. Even in this case, the number of sipes extending in the tire circumferential direction is preferably not greater than 50% and more preferably not greater than 20% of the number of sipes extending in the tire axial direction.

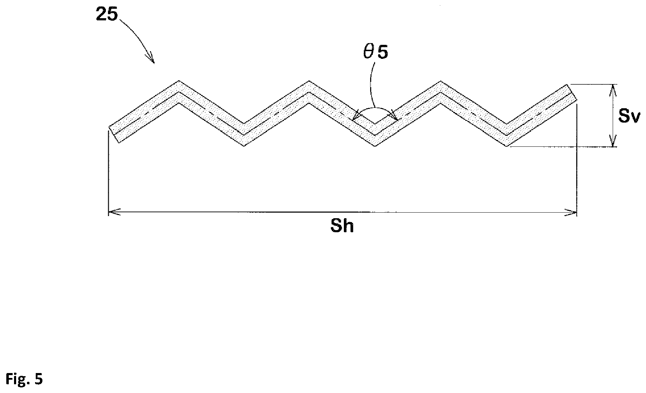

FIG. 5 shows an enlarged view of the shoulder sipe 25. For ease of understanding the invention, the opening of the shoulder sipe 25 in FIG. 5 is dotted. As shown in FIG. 3 and FIG. 5, each of the plurality of shoulder sipes 25 includes a shoulder circumferential edge component Sv. The shoulder circumferential edge component Sv corresponds to the length in the tire circumferential direction of the shoulder sipe 25. In other words, the shoulder circumferential edge component Sv corresponds to the length in the tire circumferential direction of a virtual region obtained by projecting the shoulder sipe 25 so as to be parallel to the tire axial direction.

Similarly, each of the plurality of shoulder sipes 25 includes a shoulder axial edge component Sh. The shoulder axial edge component Sh corresponds to the length in the tire axial direction of the shoulder sipe 25. In other words, the shoulder axial edge component Sh corresponds to the length in the tire axial direction of a virtual region obtained by projecting the shoulder sipe 25 so as to be parallel to the tire circumferential direction.

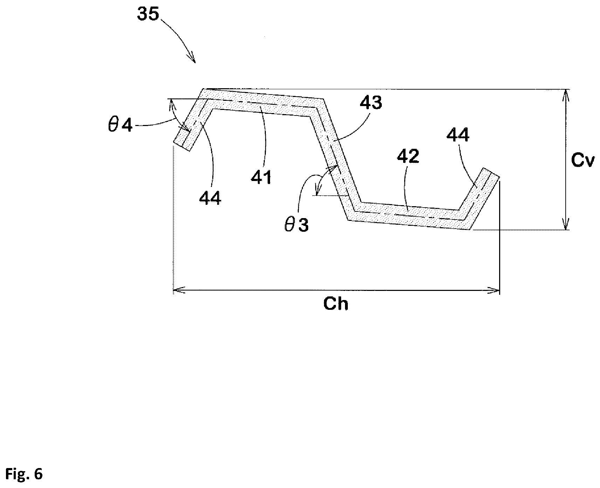

FIG. 6 shows an enlarged view of the crown sipe 35. For ease of understanding the invention, the opening of the crown sipe 35 in FIG. 6 is dotted. As shown in FIG. 4 and FIG. 6, each of the plurality of crown sipes 35 includes a crown circumferential edge component Cv. The crown circumferential edge component Cv corresponds to the length in the tire circumferential direction of the crown sipe 35. In other words, the crown circumferential edge component Cv corresponds to the length in the tire circumferential direction of a virtual region obtained by projecting the crown sipe 35 so as to be parallel to the tire axial direction.

Similarly, each of the plurality of crown sipes 35 includes a crown axial edge component Ch. The crown axial edge component Ch corresponds to the length in the tire axial direction of the crown sipe 35. In other words, the crown axial edge component Ch corresponds to the length in the tire axial direction of a virtual region obtained by projecting the crown sipe 35 so as to be parallel to the tire circumferential direction.

As shown in FIG. 2, in the present invention, a total sum ΣCv of the crown circumferential edge components Cv of all the crown sipes 35 formed on one crown block 30 is larger than a total sum ΣSv of the shoulder circumferential edge components Sv of all the shoulder sipes 25 formed on one shoulder block 20. As a result of adopting the above configuration, the tire 1 according to the present invention can exhibit excellent performance on ice and snow while maintaining uneven wear resistance. The reasons for this are as follows.

The plurality of shoulder sipes 25 and the plurality of crown sipes 35 described above provide a large frictional force in the tire circumferential direction during running on ice and snow, so that excellent performance on ice and snow is exhibited. In addition, in the present invention, each of the plurality of crown sipes 35 is closed at at least one end thereof at the ground-contact surface of the crown block 30. Accordingly, a decrease in the stiffness of the crown block 30 can be suppressed, so that uneven wear resistance can be maintained.

Meanwhile, as described above, a tire including four land portions in a tread portion tends to have an insufficient frictional force in the tire axial direction during running on ice and snow. On the other hand, in the present invention, the total sum ΣCv of the crown circumferential edge components Cv is larger than the total sum ΣSv of the shoulder circumferential edge components Sv. Therefore, during running on an ice and snow road, the crown sipes 35 can provide a large frictional force in the tire axial direction, so that excellent performance on ice and snow can be exhibited. For these reasons, the tire 1 according to the present invention can exhibit excellent performance on ice and snow while maintaining uneven wear resistance.

Hereinafter, more detailed configurations of the present embodiment of the invention will be described. The configurations described below show a specific mode of the present embodiment of the invention. Therefore, it is needless to say that the present invention can achieve the above-described effect even when the configurations described below are not provided. In addition, even when any one of the configurations described below is independently applied to the tire 1 according to the present invention having the above-described characteristics, performance improvement corresponding to each configuration can be expected. Furthermore, when some of the configurations described below are applied in combination, complex performance improvement corresponding to each configuration can be expected.

As shown in FIG. 2, the crown circumferential groove 5 and the first shoulder circumferential groove 6 each extend in the tire circumferential direction with a constant groove width. A groove width W2 of the crown circumferential groove 5 is preferably not greater than 4.0% and more preferably 3.0% to 4.0% of the tread width TW (shown in FIG. 1). A groove width W3 of the first shoulder circumferential groove 6 is, for example, 4.0% to 5.0% of the tread width TW. In the present embodiment of the invention, the groove width W3 of the first shoulder circumferential groove 6 is larger than the groove width W2 of the crown circumferential groove 5. Accordingly, the first shoulder circumferential groove 6 can exhibit excellent performance on ice and snow while uneven wear around the crown circumferential groove 5 is suppressed.

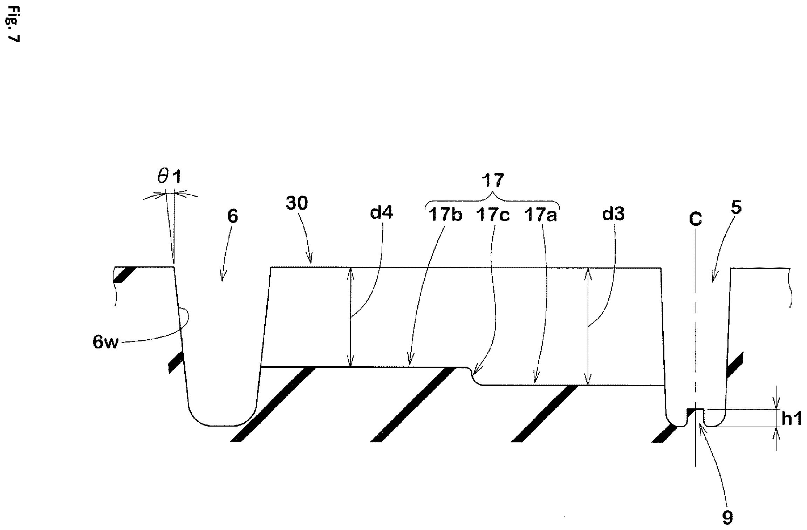

FIG. 7 shows a cross-sectional view taken along a line A-A in FIG. 2. As shown in FIG. 2 and FIG. 7, the crown circumferential groove 5 includes a plurality of projections 9 locally raised from a bottom surface thereof. In the present invention, since the total sum ΣCv is larger than the total sum ΣSv, each crown block 30 easily becomes deformed in the tire axial direction, and stones may be trapped in the crown circumferential groove 5. In the present embodiment of the invention, since the crown circumferential groove 5 includes the plurality of projections 9 described above, the above-described defect can be suppressed, so that excellent anti-stone trapping performance can be exhibited.

From the viewpoint of improving performance on ice and snow and anti-stone trapping performance in a well-balanced manner, as shown in FIG. 7, a maximum height h1 in the tire radial direction of each projection 9 is preferably 1.0 to 2.0 mm. In addition, as shown in FIG. 2, an interval L2 between two projections 9 adjacent to each other in the tire circumferential direction is not greater than 3.0 mm and preferably 1.5 to 3.0 mm. Such projections 9 serve to maintain the volume of the crown circumferential groove 5. Moreover, these projections 9 provide a large reaction force by shearing snow compacted in the groove during running on snow, and serve to enhance traction performance on snow. The interval L2 is measured, for example, at the center position in the height direction of each projection 9.

As shown in FIG. 7, preferably, the first shoulder circumferential groove 6 is not provided with the above-described projections 9. Accordingly, excellent wet performance and performance on ice and snow are exhibited. Meanwhile, from the viewpoint of improving anti-stone trapping performance without relying on projections, an angle θ1 of a groove wall 6w of the first shoulder circumferential groove 6 with respect to a tire normal line is set to be not less than 4.0° and preferably 5 to 15°. Accordingly, foreign matter, such as stones, that have entered the first shoulder circumferential groove 6 can be easily removed. The angle θ1 is measured in a state where the tire internal pressure is substantially 0.

As shown in FIG. 2, each shoulder axial groove 16 includes an inner groove portion 18 and an outer groove portion 19. The inner groove portion 18 communicates with the first shoulder circumferential groove 6 and extends with a constant groove width W4. The outer groove portion 19 communicates with the outer side in the tire axial direction of the inner groove portion 18 and extends to at least the first tread end T1. The outer groove portion 19 extends in the tire axial direction with a constant groove width W5. The groove width W5 of the outer groove portion 19 is larger than the groove width W4 of the inner groove portion 18. Specifically, the groove width W5 is 130% to 150% of the groove width W4. The shoulder axial groove 16 including such an inner groove portion 18 and such an outer groove portion 19 can suppress uneven wear of the first shoulder land portion 11 around a portion communicating with the first shoulder circumferential groove 6.

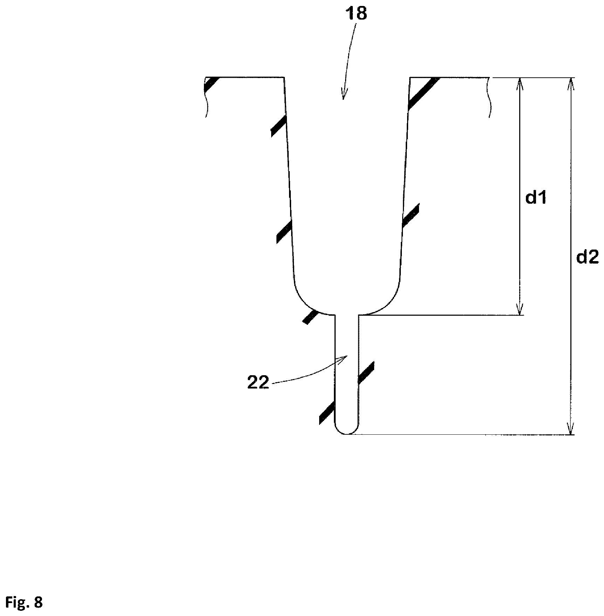

FIG. 8 shows a cross-sectional view taken along a line B-B in FIG. 2. As shown in FIG. 8, a maximum depth d1 (which is the maximum depth excluding a groove bottom sipe 22 described later) of the inner groove portion 18 is preferably smaller than the maximum depth (not shown) of the outer groove portion 19. Specifically, the maximum depth d1 of the inner groove portion 18 is 40% to 60% of the maximum depth of the outer groove portion 19. Accordingly, uneven wear resistance and performance on ice and snow are improved in a well-balanced manner.

From the viewpoint of maintaining performance on ice and snow and wet performance, the inner groove portion 18 is preferably provided with the groove bottom sipe 22 which is open on a bottom surface thereof. A depth d2 from a ground-contact surface of the first shoulder land portion 11 to the bottom of the groove bottom sipe 22 is, for example 70% to 90% of the maximum depth of the outer groove portion 19.

As shown in FIG. 3, a width W6 in the tire axial direction of a ground-contact surface of the shoulder block 20 is, for example, 20% to 25% of the tread width TW (shown in FIG. 1). In addition, a length L3 in the tire circumferential direction of the ground-contact surface of the shoulder block 20 is preferably smaller than the width W6 of the shoulder block 20. Specifically, the length L3 of the shoulder block 20 is 75% to 90% of the width W6. Such a shoulder block 20 can exhibit excellent steering stability while suppressing heel-and-toe wear.

On the shoulder block 20, the plurality of shoulder sipes 25 are arranged so as to be aligned in the tire circumferential direction and the tire axial direction. Specifically, on the shoulder block 20, a plurality of sipe pairs 23 each composed of two shoulder sipes 25 aligned in the tire axial direction are provided in the tire circumferential direction.

The sum of the shoulder axial edge components Sh of the two shoulder sipes 25 included in one sipe pair 23 is preferably not less than 80% and specifically 80% to 90% of the width W6 in the tire axial direction of the ground-contact surface of the shoulder block 20. Accordingly, performance on ice and snow can be improved while uneven wear of the shoulder block 20 is suppressed.

By the plurality of sipe pairs 23 described above, a first sipe group 24A including a plurality of shoulder sipes 25 aligned in the tire circumferential direction on the first shoulder circumferential groove 6 side and a second sipe group 24B including a plurality of shoulder sipes 25 aligned in the tire circumferential direction on the first tread end T1 side are provided in the shoulder block 20.

Each of the first sipe group 24A and the second sipe group 24B of the present embodiment of the invention is composed of, for example, 4 to 8 shoulder sipes 25. Accordingly, one shoulder block 20 is provided with 8 to 16 shoulder sipes 25. However, the present invention is not limited to such a mode.

The shoulder sipes 25 include a plurality of first shoulder sipes 26 included in the first sipe group 24A, and a plurality of second shoulder sipes 27 and a plurality of third shoulder sipes 28 included in the second sipe group 24B.

Preferably, each first shoulder sipe 26 does not communicate with the first shoulder circumferential groove 6. In a more preferable mode, both ends of the first shoulder sipe 26 are closed at the ground-contact surface of the shoulder block 20. In addition, the shoulder axial edge component Sh of one first shoulder sipe 26 is, for example, 35% to 50% of the width W6 of the ground-contact surface of the shoulder block 20. Accordingly, the stiffness of the shoulder block 20 is maintained, so that uneven wear resistance is improved.

In a preferable mode, the positions in the tire axial direction of ends 26a on the first tread end T1 side of the first shoulder sipes 26 are aligned with each other. Specifically, the distance in the tire axial direction between the end 26a of one first shoulder sipe 26 and the end 26a of a first shoulder sipe 26 adjacent to the one first shoulder sipe 26 is preferably not greater than 2.0 mm and more preferably not greater than 1.0 mm. Accordingly, each first shoulder sipe 26 easily opens and can provide a large frictional force during running on ice and snow.

The second sipe group 24B of the present embodiment of the invention is composed of three second shoulder sipes 27 and two third shoulder sipes 28, and these shoulder sipes are arranged alternately in the tire circumferential direction. In addition, the second shoulder sipes 27 and the third shoulder sipes 28 are each closed at the ground-contact surface of the shoulder block 20 at an end thereof on the tire equator C side. In addition, the end on the first tread end T1 side of each second shoulder sipe 27 does not reach the first tread end T1 and is closed at the ground-contact surface of the shoulder block 20. Meanwhile, each third shoulder sipe 28 extends to at least the first tread end T1, and extends beyond the first tread end T1 in the present embodiment of the invention (not shown). Such second shoulder sipes 27 and such third shoulder sipes 28 can improve anti-wandering performance while suppressing uneven wear around the first tread end T1.

In a preferable mode, the positions in the tire axial direction of ends on the tire equator C side of the second shoulder sipes 27 and the third shoulder sipes 28 are aligned with each other. Specifically, the distance in the tire axial direction between an end 27a of one second shoulder sipe 27 and an end 28a of a third shoulder sipe 28 adjacent to the one second shoulder sipe 27 is preferably not greater than 2.0 mm and more preferably not greater than 1.0 mm. Accordingly, each second shoulder sipe 27 and each third shoulder sipe 28 easily open moderately and can provide a large frictional force during running on ice and snow.

The shoulder axial edge component Sh of one second shoulder sipe 27 and the shoulder axial edge component Sh of one third shoulder sipe 28 are each 30% to 50% of the width W6 of the ground-contact surface of the shoulder block 20. In a more preferable mode, the shoulder axial edge component Sh of the second shoulder sipe 27 is preferably smaller than the shoulder axial edge component Sh of the first shoulder sipe 26. Accordingly, uneven wear resistance and performance on ice and snow are improved in a well-balanced manner.

Each of the first shoulder sipes 26, the second shoulder sipes 27, and the third shoulder sipes 28 of the present embodiment of the invention does not cross a center position 20c in the tire axial direction of the ground-contact surface of the shoulder block 20. In a more preferable mode, an interval L4 in the tire axial direction between the first shoulder sipe 26 and the second shoulder sipe 27 or the third shoulder sipe 28 is 2.0 to 5.0 mm. Accordingly, uneven wear at a center portion in the tire axial direction of the shoulder block 20 can be suppressed.

Each shoulder sipe 25 preferably extends in a zigzag manner. In addition, in each shoulder sipe 25, an angle of a virtual straight line (not shown) obtained by connecting both ends of the shoulder sipe 25, with respect to the tire axial direction, is preferably not greater than 20°. Moreover, a bending angle θ5 (shown in FIG. 5) of the shoulder sipe 25 extending in a zigzag manner is, for example, 100 to 120°. Accordingly, the shoulder circumferential edge component Sv (shown in FIG. 5) of one shoulder sipe 25 is 5% to 10% of the length L3 in the tire circumferential direction of the shoulder block 20. Such a shoulder sipe 25 can also provide a frictional force in the tire axial direction during running on ice and snow.

As shown in FIG. 2, each crown axial groove 17 extends, for example, in a straight manner in the tire axial direction with a constant groove width W7. The groove width W7 of the crown axial groove 17 is, for example, smaller than the groove width W4 of the inner groove portion 18 of the shoulder axial groove 16. Specifically, the groove width W7 of the crown axial groove 17 is 60% to 80% of the groove width W4 of the inner groove portion 18. Such a crown axial groove 17 can suppress uneven wear of the first crown land portion 13 and improve steering stability on a dry road surface.

The crown axial groove 17 is, for example, slightly inclined with respect to the tire axial direction. A maximum angle θ2 of the crown axial groove 17 with respect to the tire axial direction is not greater than 30° and preferably 5 to 15°.

The crown axial groove 17 preferably communicates with the first shoulder circumferential groove 6 at a position different in the tire circumferential direction from that of the shoulder axial groove 16. Specifically, in a tread plan view, a virtual region 21 (dotted in FIG. 2) obtained by extending an end portion on the first shoulder circumferential groove 6 side of the shoulder axial groove 16 so as to be parallel to the tire axial direction does not overlap an end portion on the first shoulder circumferential groove 6 side of the crown axial groove 17. Accordingly, uneven wear around the first shoulder circumferential groove 6 is suppressed.

As shown in FIG. 7, the crown axial groove 17 includes a first groove portion 17a on the crown circumferential groove 5 side and a second groove portion 17b on the first shoulder circumferential groove 6 side. The first groove portion 17a has a constant depth d3 in the length direction of the crown axial groove 17. The second groove portion 17b has a constant depth d4 in the length direction of the crown axial groove 17. The depth d4 of the second groove portion 17b is smaller than the depth d3 of the first groove portion 17a. Specifically, the depth d4 of the second groove portion 17b is 75% to 95% of the depth d3 of the first groove portion 17a. In addition, a boundary 17c between the first groove portion 17a and the second groove portion 17b is located in a center region when the crown axial groove 17 is divided into three equal regions in the tire axial direction. The crown axial groove 17 including such a first groove portion 17a and such a second groove portion 17b serves to enhance performance on ice and snow and steering stability on a dry road surface in a well-balanced manner.

As shown in FIG. 2, the maximum width in the tire axial direction of a ground-contact surface of the first crown land portion 13 is not greater than 95% of the maximum width in the tire axial direction of the ground-contact surface of the first shoulder land portion 11. Specifically, as shown in FIG. 4, a width W8 in the tire axial direction of the ground-contact surface of the crown block 30 is 80% to 90% of the width W6 in the tire axial direction (shown in FIG. 3) of the ground-contact surface of the shoulder block 20. In addition, a length L5 in the tire circumferential direction of the ground-contact surface of the crown block 30 is preferably larger than the width W8 of the crown block 30. Specifically, the length L5 of the crown block 30 is 105% to 115% of the width W8. Such a crown block 30 serves to enhance cornering performance on ice and snow.

Each crown block 30 of the present embodiment of the invention includes, in the tire circumferential direction, a plurality of crown sipe groups 33 each including a plurality of crown sipes 35 aligned in the tire axial direction. One crown block 30 is provided, for example, with 2 to 5 crown sipe groups 33. However, the present invention is not limited to such a mode.

One crown sipe group 33 is composed of, for example, 3 to 6 crown sipes 35. Each crown sipe group 33 of the present embodiment of the invention is composed of one first crown sipe 36, two second crown sipes 37, and one third crown sipe 38. The first crown sipe 36 communicates with the crown circumferential groove 5. Each second crown sipe 37 is closed at both ends thereof at the ground-contact surface of the crown block 30. The third crown sipe 38 communicates with the first shoulder circumferential groove 6.

The plurality of crown sipes 35 included in one crown sipe group 33 preferably overlap each other in the tire axial direction. In other words, a virtual region obtained by extending one crown sipe 35 so as to be parallel to the tire circumferential direction overlaps a crown sipe 35 adjacent to the one crown sipe 35 in the tire axial direction. The arrangement of such crown sipes 35 serves to enhance performance on ice and snow.

As shown in FIG. 4 and FIG. 6, each crown sipe 35 of the present embodiment of the invention includes a first sipe piece 41, a second sipe piece 42, and a third sipe piece 43. The first sipe piece 41 and the second sipe piece 42 each extend in the tire axial direction, and the second sipe piece 42 is provided on the tire equator C side with respect to the first sipe piece 41 and is displaced in the tire circumferential direction with respect to the first sipe piece 41. The third sipe piece 43 is connected between the first sipe piece 41 and the second sipe piece 42, and has a larger angle with respect to the tire axial direction than the first sipe piece 41 and the second sipe piece 42. An angle θ3 (shown in FIG. 6) of the third sipe piece 43 with respect to the tire axial direction is, for example, 60 to 80°. Such a crown sipe 35 can provide a frictional force in multiple directions, and can enhance traction performance and cornering performance during running on ice and snow.

An inclined piece 44 is formed at an end portion of the crown sipe 35 so as to extend at a larger angle with respect to the tire axial direction than the first sipe piece 41 or the second sipe piece 42. An angle θ4 (shown in FIG. 6) of the inclined piece 44 with respect to the tire axial direction is, for example, 60 to 80°. In the present embodiment of the invention, the angle θ4 is substantially equal to the angle θ3 of the third sipe piece 43. Such an inclined piece 44 can inhibit the crown sipe 35 from excessively opening and can suppress uneven wear around the crown sipe 35.

As shown in FIG. 4, in the present embodiment of the invention, in the first crown sipe 36, an inclined piece 44 is formed at an end portion on the first tread end T1 side, but is not formed at an end portion on the side opposite thereto. In each second crown sipe 37, an inclined piece 44 is formed at each of end portions on both sides in the tire axial direction. In the third crown sipe 38, an inclined piece 44 is formed at an end portion on the tire equator C side, but is not formed at an end portion on the side opposite thereto. The arrangement of such inclined pieces 44 serves to enhance uneven wear resistance and performance on ice and snow in a well-balanced manner.

The crown circumferential edge component Cv (shown in FIG. 6) of one crown sipe 35 is, for example, 5% to 15% of the length L5 in the tire circumferential direction (shown in FIG. 4) of the crown block 30. However, the present invention is not limited to such a mode.

As shown in FIG. 2, the total sum ΣCv of the crown circumferential edge components Cv is preferably not less than 105% and more preferably not less than 130%, and is preferably not greater than 220% and more preferably not greater than 180%, of the total sum ΣSv of the shoulder circumferential edge components Sv. Accordingly, performance on ice and snow and steering stability on a dry road surface are improved in a well-balanced manner.

The crown axial edge component Ch (shown in FIG. 6) of one crown sipe 35 is 30% to 40% of the width W8 in the tire axial direction (shown in FIG. 4) of the crown block 30. In addition, a total sum ΣCh of the crown axial edge components Ch of all the crown sipes 35 formed on one crown block 30 is preferably smaller than a total sum ΣSh of the shoulder axial edge components Sh of all the shoulder sipes 25 formed on one shoulder block 20.
Specifically, the total sum ΣCh is preferably not greater than 95% and more preferably not greater than 85%, and is preferably not less than 50% and more preferably not less than 70%, of the total sum ΣSh. Accordingly, traction performance during running on ice and snow can be improved while uneven wear resistance is maintained.

A complex elastic modulus E* at 0°C of a tread rubber forming the tread portion 2 as shown in FIG. 1 is 5.0 to 9.0 MPa. Accordingly, performance on ice and snow and uneven wear resistance are improved in a well-balanced manner. The complex elastic modulus E* is a value measured according to the standards of JIS-K6394 under the following conditions using a viscoelasticity spectrometer.
Initial strain: 10%
Amplitude: ±2%
Frequency: 10 Hz
Deformation mode: tensile
Measurement temperature: 0°C

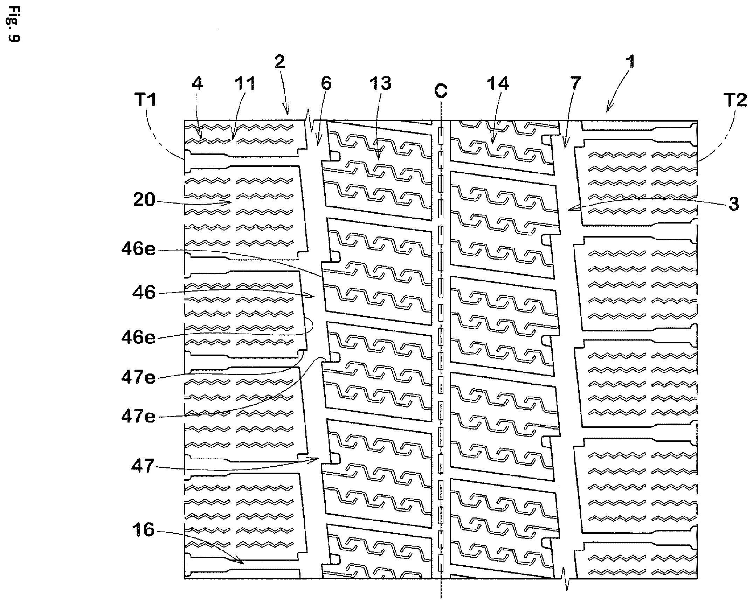

FIG. 9 shows a development of a tread portion 2 of a tire 1 according to another embodiment of the present invention. In FIG. 9, the already-described components are designated by common reference characters, and the description thereof is omitted here. As shown in FIG. 9, the first shoulder circumferential groove 6 of this embodiment of the invention extends in a zigzag manner. Specifically, the first shoulder circumferential groove 6 of this embodiment of the invention extends in a zigzag manner by alternately including a plurality of circumferential groove portions 46 and a plurality of axial groove portions 47 in the tire circumferential direction. Each circumferential groove portion 46 is, for example, a portion including two edges 46e inclined at 5 to 15° with respect to the tire circumferential direction. Each axial groove portion 47 is a portion including two edges 47e arranged at an angle of 10° or less with respect to the tire axial direction. Such a first shoulder circumferential groove 6 can strongly compact snow therein.

Although the embodiments of the present invention have been described in detail above, the present invention is not limited to the above specific embodiments, and various modifications can be made to implement the present invention within the scope of the appended claims. include a first sipe piece extending in the tire axial direction, a second sipe piece extending in the tire axial direction on the tire equator side with respect to the first sipe piece, and a third sipe piece connected between the first sipe piece and the second sipe piece and having a larger angle with respect to the tire axial direction than the first sipe piece and the second sipe piece.

### [Present Invention 7]

The tire according to Present Invention 1 or 2, wherein a maximum width in the tire axial direction of a ground-contact surface of the first crown land portion is not greater than 95% of a maximum width in the tire axial direction of a ground-contact surface of the first shoulder land portion.

### [Present Invention 8]

The tire according to Present Invention 1 or 2, wherein the crown circumferential groove includes a plurality of projections locally raised from a bottom surface thereof.

### [Present Invention 9]

The tire according to Present Invention 8, wherein a maximum height in a tire radial direction of each of the projections is 1.0 to 2.0 mm.

## Claims

1. A tire (1) comprising a tread portion (2), wherein
the tread portion (2) includes a first tread end (T1), a second tread end (T2), three circumferential grooves (3) continuously extending in a tire circumferential direction between the first tread end (T1) and the second tread end (T2), and four land portions (4) demarcated by the three circumferential grooves (3),
the three circumferential grooves (3) include a first shoulder circumferential groove (6) provided between the first tread end (T1) and a tire equator (C) and a crown circumferential groove (5) adjacent to a tire equator (C) side of the first shoulder circumferential groove (6),
the four land portions (4) include a first shoulder land portion (11) including the first tread end (T1) and a first crown land portion (13) demarcated between the first shoulder circumferential groove (6) and the crown circumferential groove (5),
the first shoulder land portion (11) includes a plurality of shoulder blocks (20) demarcated by a plurality of shoulder axial grooves (16) extending from the first shoulder circumferential groove (6) to at least the first tread end (T1),
each of the plurality of shoulder blocks (20) is provided with a plurality of shoulder sipes (25) extending in a tire axial direction,
the first crown land portion (13) includes a plurality of crown blocks (30) demarcated by a plurality of crown axial grooves (17) extending from the first shoulder circumferential groove (6) to the crown circumferential groove (5), and
each of the plurality of shoulder sipes (25) includes a shoulder circumferential edge component (Sv) which is a length in the tire circumferential direction,
**characterized in that**
each of the plurality of crown blocks (30) is provided with a plurality of crown sipes (35) extending in the tire axial direction,
each of the plurality of crown sipes (35) is closed at a ground-contact surface of the crown block (30) without communicating with any of the crown circumferential groove (5) and the first shoulder circumferential groove (6) at at least one end thereof,
each of the plurality of crown sipes (35) includes a crown circumferential edge component (Cv) which is a length in the tire circumferential direction, and
a total sum ΣCv of the crown circumferential edge components (Cv) of all the crown sipes (35) formed on the one crown block (30) is larger than a total sum ΣSv of the shoulder circumferential edge components (Sv) of all the shoulder sipes (25) formed on the one shoulder block (20).

2. The tire (1) according to claim 1, wherein the total sum ΣCv of the crown circumferential edge components (Cv) is 105% to 200% of the total sum ΣSv of the shoulder circumferential edge components (Sv).

3. The tire (1) according to claim 1 or 2, wherein
each of the plurality of shoulder sipes (25) includes a shoulder axial edge component (Sh) which is a length in the tire axial direction,
each of the plurality of crown blocks (30) includes a crown axial edge component (Ch) which is a length in the tire axial direction, and
a total sum ΣCh of the crown axial edge components (Ch) of all the crown sipes (35) formed on the one crown block (30) is smaller than a total sum ΣSh of the shoulder axial edge components (Sh) of all the shoulder sipes (25) formed on the one shoulder block (20).

4. The tire (1) according to claim 3, wherein the total sum ΣCh of the crown axial edge components (Ch) is 50% to 95% of the total sum ΣSh of the shoulder axial edge components (Sh).

5. The tire (1) according to claim 3 or 4, wherein
on the shoulder block (20), a plurality of sipe pairs (23) each composed of the two shoulder sipes (25) aligned in the tire axial direction are provided in the tire circumferential direction, and
a sum of the shoulder axial edge components (Sh) of the two shoulder sipes (25) included in the one sipe pair (23) is not less than 80% of a width (W6) in the tire axial direction of a ground-contact surface of the shoulder block (20).

6. The tire (1) according to any one of claims 1 to 5, wherein the crown sipes (35) each include a first sipe piece (41) extending in the tire axial direction, a second sipe piece (42) extending in the tire axial direction on the tire equator (C) side with respect to the first sipe piece (41), and a third sipe piece (43) connected between the first sipe piece (41) and the second sipe piece (42) and having a larger angle with respect to the tire axial direction than the first sipe piece (41) and the second sipe piece (42).

7. The tire (1) according to any one of claims 1 to 6, wherein a maximum width in the tire axial direction of a ground-contact surface of the first crown land portion (13) is not greater than 95% of a maximum width in the tire axial direction of a ground-contact surface of the first shoulder land portion (11).

8. The tire (1) according to any one of claims 1 to 7, wherein the crown circumferential groove (5) includes a plurality of projections (9) locally raised from a bottom surface thereof.

9. The tire (1) according to claim 8, wherein a maximum height (h1) in a tire radial direction of each of the projections (9) is 1.0 to 2.0 mm.

## Patentansprüche

1. Reifen (1) mit einem Laufflächenabschnitt (2), wobei
der Laufflächenabschnitt (2) ein erstes Laufflächenende (T1), ein zweites Laufflächenende (T2), drei Umfangsrillen (3), die sich kontinuierlich in einer Reifenumfangsrichtung zwischen dem ersten Laufflächenende (T1) und dem zweiten Laufflächenende (T2) erstrecken, und vier Landabschnitte (4) aufweist, die durch die drei Umfangsrillen (3) abgegrenzt sind,
die drei Umfangsrillen (3) eine erste Schulterumfangsrille (6), die zwischen dem ersten Laufflächenende (T1) und einem Reifenäquator (C) vorgesehen ist, und eine Kronenumfangsrille (5) benachbart zu einer Seite des Reifenäquators (C) der ersten Schulterumfangsrille (6) aufweisen,
die vier Landabschnitte (4) einen ersten Schulterlandabschnitt (11), der das erste Laufflächenende (T1) aufweist, und einen ersten Kronenlandabschnitt (13) aufweisen, der zwischen der ersten Schulterumfangsrille (6) und der Kronenumfangsrille (5) abgegrenzt ist,
der erste Schulterlandabschnitt (11) eine Vielzahl von Schulterblöcken (20) aufweist, die durch eine Vielzahl von Schulteraxialrillen (16) abgegrenzt sind, die sich von der ersten Schulterumfangsrille (6) zu mindestens dem ersten Laufflächenende (T1) erstrecken,
jeder der Vielzahl von Schulterblöcken (20) mit einer Vielzahl von Schulterfeinschnitten (25) versehen ist, die sich in einer Reifenaxialrichtung erstrecken,
der erste Kronenlandabschnitt (13) eine Vielzahl von Kronenblöcken (30) aufweist, die durch eine Vielzahl von Kronenaxialrillen (17) abgegrenzt sind, die sich von der ersten Schulterumfangsrille (6) zu der Kronenumfangsrille (5) erstrecken, und
jeder der Vielzahl von Schulterfeinschnitten (25) eine Schulterumfangskantenkomponente (Sv) aufweist, die eine Länge in der Reifenumfangsrichtung ist,
**dadurch gekennzeichnet, dass**
jeder der Vielzahl von Kronenblöcken (30) mit einer Vielzahl von Kronenfeinschnitten (35) versehen ist, die sich in der Reifenaxialrichtung erstrecken,
jeder der Vielzahl von Kronenfeinschnitten (35) an einer Bodenkontaktfläche des Kronenblocks (30) geschlossen ist, ohne mit einer der Kronenumfangsrille (5) und der ersten Schulterumfangsrille (6) an mindestens einem Ende davon in Verbindung zu stehen,
jeder der Vielzahl von Kronenfeinschnitten (35) eine Kronenumfangskantenkomponente (Cv) aufweist, die eine Länge in der Reifenumfangsrichtung ist, und
eine Gesamtsumme ΣCv der Kronenumfangskantenkomponenten (Cv) aller Kronenfeinschnitte (35), die an dem einen Kronenblock (30) ausgebildet sind, größer ist als eine Gesamtsumme ΣSv der Schulterumfangskantenkomponenten (Sv) aller Schulterfeinschnitte (25), die an dem einen Schulterblock (20) ausgebildet sind.

2. Reifen (1) nach Anspruch 1, wobei die Gesamtsumme ΣCv der Kronenumfangskantenkomponenten (Cv) 105 % bis 200 % der Gesamtsumme ΣSv der Schulterumfangskantenkomponenten (Sv) beträgt.

3. Reifen (1) nach Anspruch 1 oder 2, wobei
jeder der Vielzahl von Schulterfeinschnitten (25) eine Schulteraxialkantenkomponente (Sh) aufweist, die eine Länge in der Reifenaxialrichtung ist,
jeder der Vielzahl von Kronenblöcken (30) eine Kronenaxialkantenkomponente (Ch) aufweist, die eine Länge in der Reifenaxialrichtung ist, und
eine Gesamtsumme ΣCh der Kronenaxialkantenkomponenten (Ch) aller Kronenfeinschnitte (35), die an dem einen Kronenblock (30) ausgebildet sind, kleiner ist als eine Gesamtsumme ΣSh der Schulteraxialkantenkomponenten (Sh) aller Schulterfeinschnitte (25), die an dem einen Schulterblock (20) ausgebildet sind.

4. Reifen (1) nach Anspruch 3, wobei die Gesamtsumme ΣCh der Kronenaxialkantenkomponenten (Ch) 50 % bis 95 % der Gesamtsumme ΣSh der Schulteraxialkantenkomponenten (Sh) beträgt.

5. Reifen (1) nach Anspruch 3 oder 4, wobei
an dem Schulterblock (20) eine Vielzahl von Feinschnittpaaren (23), die jeweils aus den zwei Schulterfeinschnitten (25) bestehen, die in der Reifenaxialrichtung ausgerichtet sind, in der Reifenumfangsrichtung vorgesehen sind, und
eine Summe der Schulteraxialkantenkomponenten (Sh) der zwei Schulterfeinschnitte (25), die in dem einen Feinschnittpaar (23) enthalten sind, nicht weniger als 80 % einer Breite (W6) in der Reifenaxialrichtung einer Bodenkontaktfläche des Schulterblocks (20) beträgt.

6. Reifen (1) nach einem der Ansprüche 1 bis 5, wobei die Kronenfeinschnitte (35) jeweils ein erstes Feinschnittstück (41), das sich in der Reifenaxialrichtung erstreckt, ein zweites Feinschnittstück (42), das sich in der Reifenaxialrichtung auf der Seite des Reifenäquators (C) in Bezug auf das erste Feinschnittstück (41) erstreckt, und ein drittes Feinschnittstück (43) aufweisen, das zwischen dem ersten Feinschnittstück (41) und dem zweiten Feinschnittstück (42) verbunden ist und einen größeren Winkel in Bezug auf die Reifenaxialrichtung als das erste Feinschnittstück (41) und das zweite Feinschnittstück (42) aufweist.

7. Reifen (1) nach einem der Ansprüche 1 bis 6, wobei eine maximale Breite in der Reifenaxialrichtung einer Bodenkontaktfläche des ersten Kronenlandabschnitts (13) nicht größer als 95 % einer maximalen Breite in der Reifenaxialrichtung einer Bodenkontaktfläche des ersten Schulterlandabschnitts (11) ist.

8. Reifen (1) nach einem der Ansprüche 1 bis 7, wobei die Kronenumfangsrille (5) eine Vielzahl von Vorsprüngen (9) aufweist, die lokal von einer Bodenfläche davon erhöht sind.

9. Reifen (1) nach Anspruch 8, wobei eine maximale Höhe (h1) in einer Reifenradialrichtung jedes der Vorsprünge (9) 1,0 bis 2,0 mm beträgt.

## Revendications

1. Pneumatique (1) comprenant une portion formant bande de roulement (2), dans lequel
la portion formant bande de roulement (2) inclut une première extrémité de bande de roulement (T1), une seconde extrémité de bande de roulement (T2), trois rainures circonférentielles (3) s'étendant en continu dans une direction circonférentielle du pneumatique entre la première extrémité de bande de roulement (T1) et la seconde extrémité de bande de roulement (T2), et quatre portions en relief (4) délimitées par les trois rainures circonférentielles (3),
les trois rainures circonférentielles (3) incluent une première rainure circonférentielle d'épaulement (6) prévue entre la première extrémité de bande de roulement (T1) et un équateur de pneumatique (C), et une rainure circonférentielle de couronne (5) adjacente à un côté de l'équateur de pneumatique (C) de la première rainure circonférentielle d'épaulement (6),
les quatre portions en relief (4) incluent une première portion en relief d'épaulement (11) incluant la première extrémité de bande de roulement (T1) et une première portion en relief de couronne (13) délimitée entre la première rainure circonférentielle d'épaulement (6) et la rainure circonférentielle de couronne (5),
la première portion en relief d'épaulement (11) inclut une pluralité de blocs d'épaulement (20) délimités par une pluralité de rainures axiales épaulement (16) s'étendant depuis la première rainure circonférentielle d'épaulement (6) jusqu'à au moins la première extrémité de bande de roulement (T1),
chacun de la pluralité de blocs d'épaulement (20) est doté d'une pluralité de fentes d'épaulement (25) s'étendant dans une direction axiale du pneumatique,
la première portion en relief de couronne (13) inclut une pluralité de blocs de couronne (30) délimités par une pluralité de rainures axiales de couronne (17) s'étendant depuis la première rainure circonférentielle d'épaulement (6) jusqu'à la rainure circonférentielle de couronne (5), et
chacune de la pluralité de fentes d'épaulement (25) inclut une composante de bord circonférentiel d'épaulement (Sv) qui est une longueur dans la direction circonférentielle du pneumatique,
**caractérisé en ce que**
chacun de la pluralité de blocs de couronne (30) est doté d'une pluralité de fentes de couronne (35) s'étendant dans la direction axiale du pneumatique, chacune de la pluralité de fentes de couronne (35) est fermée au niveau d'une surface de contact au sol du bloc de couronne (30) sans communiquer avec l'une quelconque de la rainure circonférentielle de couronne (5) et de la première rainure circonférentielle d'épaulement (6) au moins au niveau d'une extrémité de celle-ci,
chacune de la pluralité de fentes de couronne (35) inclut une composante de bord circonférentiel de couronne (Cv) qui est une longueur dans la direction circonférentielle du pneumatique, et
une somme totale ΣCv des composantes de bord circonférentiel de couronne (Cv) de l'ensemble des fentes de couronne (35) formées sur ledit un bloc de couronne (30) est supérieure à une somme totale ΣSv des composantes de bord circonférentiel d'épaulement (Sv) de l'ensemble des fentes d'épaulement (25) formées sur ledit un bloc d'épaulement (20).

2. Pneumatique (1) selon la revendication 1, dans lequel la somme totale ΣCv des composantes de bord circonférentiel de couronne (Cv) est de 105 % à 200 % de la somme totale ΣSv des composantes de bord circonférentiel d'épaulement (Sv).

3. Pneumatique (1) selon la revendication 1 ou 2, dans lequel
chacune de la pluralité de fentes d'épaulement (25) inclut une composante de bord axial d'épaulement (Sh) qui est une longueur dans la direction axiale du pneumatique,
chacun de la pluralité de blocs de couronne (30) inclut une composante de bord axial de couronne (Ch) qui est une longueur dans la direction axiale du pneumatique, et
une somme totale ΣCh des composantes de bord axial de couronne (Ch) de l'ensemble des fentes de couronne (35) formées sur ledit un bloc de couronne (30) est inférieure à une somme totale ΣSh des composantes de bord axial d'épaulement (Sh) de l'ensemble des fentes d'épaulement (25) formées sur ledit un bloc d'épaulement (20).

4. Pneumatique (1) selon la revendication 3, dans lequel la somme totale ΣCh des composantes de bord axial de couronne (Cv) est de 50 % à 95 % de la somme totale ΣSh des composantes de bord axial d'épaulement (Sh).

5. Pneumatique (1) selon la revendication 3 ou 4, dans lequel
sur le bloc d'épaulement (20), une pluralité de paires de fentes (23) composées chacune des deux fentes d'épaulement (25) alignées dans la direction axiale du pneumatique sont prévues dans la direction circonférentielle du pneumatique, et
une somme des composantes de bord axial d'épaulement (Sh) des deux fentes d'épaulement (25) incluses dans ladite une paire de fentes (23) n'est pas inférieure à 80 % d'une largeur (W6) dans la direction axiale du pneumatique d'une surface de contact au sol du bloc d'épaulement (20).

6. Pneumatique (1) selon l'une quelconque des revendications 1 à 5, dans lequel les fentes de couronne (35) incluent chacune une première pièce de fente (41) s'étendant dans la direction axiale du pneumatique, une deuxième pièce de fente (42) s'étendant dans la direction axiale du pneumatique sur le côté de l'équateur de pneumatique (C) par rapport à la première pièce de fente (41), et une troisième pièce de fente (43) connectée entre la première pièce de fente (41) et la deuxième pièce de fente (42) et ayant un angle plus grand par rapport à la direction axiale du pneumatique que la première pièce de fente (41) et la deuxième pièce de fente (42).

7. Pneumatique (1) selon l'une quelconque des revendications 1 à 6, dans lequel une largeur maximum dans la direction axiale du pneumatique d'une surface de contact au sol de la première portion en relief de couronne (13) n'est pas supérieure à 95 % d'une largeur maximum dans la direction axiale du pneumatique d'une surface de contact au sol de la première portion en relief d'épaulement (11).

8. Pneumatique (1) selon l'une quelconque des revendications 1 à 7, dans lequel la rainure circonférentielle de couronne (5) inclut une pluralité de projections (9) s'élevant localement depuis une surface de fond de celle-ci.

9. Pneumatique (1) selon la revendication 8, dans lequel une hauteur maximum (h1) dans une direction radiale du pneumatique de chacune des projections (9) est de 1,0 à 2,0 mm.
